# EUROPEAN PATENT SPECIFICATION

(11) **EP 4 378 552 B1**
(45) Date of publication and mention of the grant of the patent: **27.05.2026**
(21) Application number: 23213110.2
(22) Date of filing: 29.11.2023
(51) Int. Cl.: A63F 13/44, A63F 13/533, A63F 13/5372, A63F 13/5375, A63F 13/58

(54) **METHOD AND APPARATUS FOR INTERACTION IN VIRTUAL ENVIRONMENT**
VERFAHREN UND VORRICHTUNG ZUR INTERAKTION IN EINER VIRTUELLEN UMGEBUNG
PROCÉDÉ ET APPAREIL D'INTERACTION DANS UN ENVIRONNEMENT VIRTUEL

(30) Priority: 29.11.2022 CN 202211512011
(43) Date of publication of application: 05.06.2024
(73) Proprietor: Beijing Zitiao Network Technology Co., Ltd., Beijing 100190 (CN)
(72) Inventor: GUAN, Zhong, Beijing, 100028 (CN); CAI, Xiangyu, Beijing, 100028 (CN)
(74) Representative: Marks & Clerk LLP

(56) References cited:
- CN-A- 115 068 948
- CN-A- 115 212 556

## Description

### CROSS-REFERENCE TO RELATED APPLICATION(S)

This application claims priority to and benefits of Chinese Patent Application No. 202211512011.9, filed on November 29, 2022, and entitled "Method and apparatus for interaction in virtual environment",

### TECHNICAL FIELD

Example embodiments of the present disclosure generally relate to the field of computers, and in particular to methods, devices, electronic devices, and computer-readable storage media for interacting in a virtual environment.

### BACKGROUND

With the development of computer technology, various forms of electronic devices can greatly enrich people's daily lives. For example, people can use electronic devices for various interactions in virtual scenes.

In some interactive scenarios, in order to improve the authenticity of the interaction, some interactive actions may be accompanied by some probability events (also known as random events). For example, whether the expected virtual character or virtual item can be obtained in the game may be related to whether this probability event is hit. However, traditional interaction mechanisms cannot allow operators to feel or understand this probability mechanism in interaction.

CN115212556A describes a method for interacting with a virtual object. The method includes presenting an interactive interface associated with a virtual object, the interactive interface comprising a first region, the first region presenting at least one virtual element associated with the virtual object, the first region further presenting a target value corresponding to the at least one virtual element; in response to a target virtual element of at least one virtual element being moved from the first region to a second region of the interactive interface, presenting, using a dynamic change of a probabilistic interactive element, an execution value associated with a target interactive action for the target virtual element, and controlling the execution of the target interactive action for the target virtual element.

### SUMMARY

In the first aspect of the present disclosure, a method for interacting in a virtual environment is provided. The method includes: receiving a request to perform a target action in a target interface, the target action being related to obtaining a virtual element in a virtual environment, the virtual element comprising a virtual item and/or a virtual character; presenting an execution value corresponding to an execution of the target action with dynamic changes of a probabilistic interaction element; and based on a comparison of the execution value with at least one target value among a plurality of target values presented in the target interface, determining an attribute of a target virtual element obtained based on the target action.

In the second aspect of the present disclosure, an apparatus for interacting in a virtual environment is provided. The apparatus includes: a receiving module configured to receive a request to perform a target action in a target interface, the target action being related to obtaining a virtual element in a virtual environment, the virtual element comprising a virtual item and/or a virtual character; a presenting module configured to present an execution value corresponding to an execution of the target action with dynamic changes of a probabilistic interaction elements; and a determining module configured to based on a comparison of the execution value with at least one target value among a plurality of target values presented in the target interface, determine an attribute of a target virtual element obtained based on the target action.

In a third aspect of the present disclosure, an electronic device is provided. The device includes at least one processing unit; and at least one memory, coupled to at least one processing unit and storing instructions to be performed by at least one processing unit. The method of causing the device to perform the first aspect when the instruction is performed by at least one processing unit.

In a fourth aspect of the present disclosure, a computer-readable storage medium is provided. A computer program is stored on the medium, which, when executed by a processor, implements a method according to the first aspect.

The invention is defined by the appended claims.

### BRIEF DESCRIPTION OF THE DRAWINGS

In conjunction with the accompanying drawings and with reference to the following detailed description, the above and other features, advantages, and aspects of each embodiment of the present disclosure will become more apparent. In the drawings, the same or similar reference numerals indicate the same or similar elements, where:
FIG. 1 shows a schematic diagram of an example environment in which the present disclosure can be implemented.
FIGS. 2A and 2B illustrate example interfaces according to some embodiments of the present disclosure;
FIGS. 3A and 3B show example interfaces according to other embodiments of the present disclosure.
FIGS. 4A to 4D show example interfaces according to some embodiments of the present disclosure.
FIGS. 5A and 5B illustrate example interfaces according to further embodiments of the present disclosure;
FIG. 6 shows a flowchart of an example process for interacting in a virtual environment according to some embodiments of the present disclosure.
FIG. 7 shows a block diagram of a device for interacting in a virtual environment according to some embodiments of the present disclosure.
FIG. 8 shows a block diagram of a device that can implement multiple embodiments of the present disclosure.

### DETAILED DESCRIPTION OF EMBODIMENTS

Embodiments of the present disclosure will be described in more detail below with reference to the accompanying drawings. Although some embodiments of the present disclosure have been illustrated in the accompanying drawings, it is to be understood that the present disclosure may be implemented in various manners and should not be construed to be limited to embodiments described herein. On the contrary, these embodiments are provided for a more thorough and complete understanding of the present disclosure. It is to be understood that the accompanying drawings and embodiments of the present disclosure are only for the purpose of illustration, rather than limiting the protection scope of the present disclosure.

In the description of the embodiments of the present disclosure, the term "including" and similar terms are to be understood as open terms, that is, "including but not limited to". The term "based on" is to be understood as "based at least in part on". The terms "one embodiment" or "the embodiment" are to be understood as "at least one embodiment". The term "some embodiments" is to be understood as "at least some embodiments". Other definitions, either explicit or implicit, may be included below.

As aforementioned, in the interaction of virtual environments, some interaction behaviors are usually associated with probability mechanisms. Taking games as an example, the release of some skills, for example, may be accompanied by random events that may be triggered by additional special effects (such as freezing effects, burning effects, etc.).

Traditional interaction processes usually only allow operators to understand the results of random events, and the operators are unable to understand the random mechanisms related to the interaction process, which greatly affects the user's interaction experience.

The embodiments of the present disclosure propose a subject matter for interaction in a virtual environment. According to the subject matter, requests to execute target actions can be received in the target interface. The target action can be related to obtaining virtual elements in the virtual environment. Such virtual elements can be virtual characters (such as NPCs or other users' virtual characters) and/or virtual items (items that can be used by virtual characters such as NPCs or other users).

In addition, the dynamic changes of a probability interaction element can be utilized to present an execution value corresponding to the execution of the target action, and the attributes of the target virtual element obtained based on the target action can be determined by comparing the execution value with at least one of the target values presented in the target interface. For example, this attribute can represent the type of target virtual element, that is, whether the target virtual element is a virtual item or a virtual character. In addition, the attribute can also represent its item or character attributes.

Therefore, on the one hand, the disclosed embodiments can simulate a more fine-grained interaction process for virtual elements, improving the fun of interaction. On the other hand, the implementation of this disclosure can also visually represent the probability mechanism of interaction actions through dynamic probabilistic interaction elements, thereby improving the friendliness of interaction.

The following further describes in detail the various example implementations of the subject matter in conjunction with the accompanying drawings. In order to illustrate the principles and ideas of the embodiments of the present disclosure, some descriptions below will refer to the field of gaming. However, it will be understood that this is only illustrative and is not intended to limit the scope of the present disclosure in any way. The embodiments of the present disclosure may be applied to various fields such as emulation, simulation, virtual reality, augmented reality, etc.

### EXAMPLE ENVIRONMENT

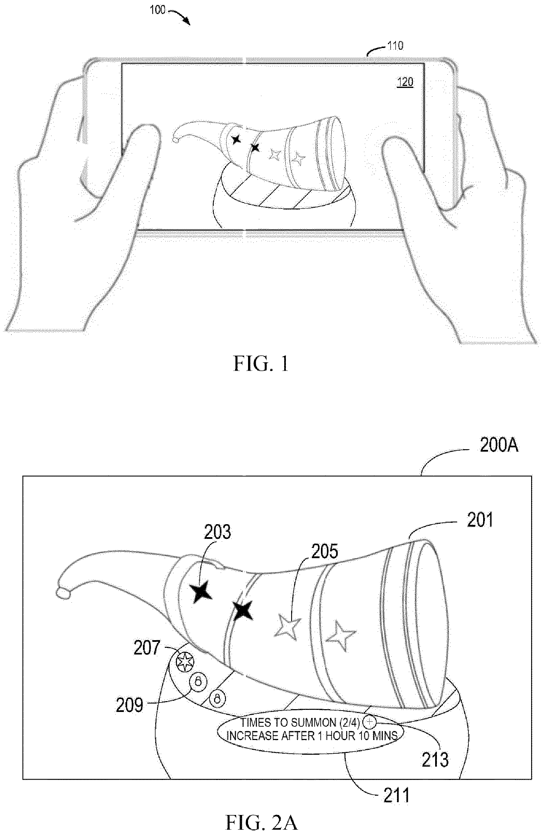

Firstly, refer to FIG. 1, which schematically illustrates an example environment 100 in which the exemplary implementation according to the present disclosure may be implemented. As shown in FIG. 1, the example environment 100 may include an electronic device 110.

In some embodiments, as shown in FIG. 1, the electronic device 110 may, for example, include a portable device of an appropriate type, which may, for example, support a user to hold with both hands for various interactive operations. Such electronic device 110 may include, for example, but not limited to: a smart phone, a tablet computer, a personal digital assistant, portable game terminals, and the like.

Such electronic device 110 may include, for example, appropriate types of sensors for detecting user gesture. For example, the electronic device 110 may include a touch screen for detecting various types of gestures made by users on the touch screen. Alternatively or additionally, the electronic device 110 may also include other appropriate types of sensing devices such as a proximity sensor to detect various types of gestures made by users within a predetermined distance above the screen.

It is to be understood that although the electronic device 110 is shown as a portable device in FIG. 1, this is only exemplary. In some other embodiments, the electronic device 110 may also be in other appropriate forms. For example, electronic device 110 may include a display device for display and a computing device for calculation, and the display device and the computing device may, for example, be physically coupled or separated.

For example, the electronic device 110 may include a display screen for screen display, and a game console for screen rendering and game control.

In this scene, the electronic device 110 may, for example, use other appropriate input devices to achieve interaction. For example, the electronic device 110 may achieve interaction through appropriate interactive devices such as a communication coupled keyboard, mouse, joystick, game controller, etc.

Continuing with reference to FIG. 1, as described in FIG. 1, the electronic device 110 may, for example, present a graphical interface 120, which may, for example, present a corresponding virtual environment. Exemplarily, the graphical interface 120 may be a game application interface to present corresponding game scenes. Alternatively, the graphical interface 120 may also be other appropriate types of interactive interface that may support users to control the execution of corresponding actions by a virtual object in the virtual environment.

The following will provide a detailed introduction to the specific process of controlling the execution of actions in a virtual environment.

### EXAMPLE INTERACTION

In order to more intuitively represent the probability mechanism in the interaction process with virtual objects in the virtual environment, the disclosed embodiments can make the user understand the judgment principle of whether the corresponding interaction action is successful by presenting probability interaction elements.

FIG. 2A illustrates an interface 200A according to some embodiments of the present disclosure. In some embodiments, the electronic device 110 may present an interface 200A as shown in FIG. 2A upon receiving an interaction request for a virtual object. As described above, such an interface 200A may include, for example, a graphical interface associated with a virtual environment. Such virtual environments may include, but are not limited to, various types of game environments, simulation environments,

Illustratively, the interface 200A may be, for example, an interactive interface associated with the execution of a target action. The target action may be performed by a target item in a virtual environment. For example, the target action may be related to obtaining a target virtual element. The user may enter the interface 200A by performing a specific operation in the virtual environment or by clicking a specific button on the interface.

In some embodiments, the target virtual element may be a virtual item in a virtual environment. In some other embodiments, the target virtual element may be a virtual character in the virtual environment (e.g., an NPC or other user's virtual character).

As shown in FIG. 2A, the interface 200A may include a target item 201. For example, in the process of obtaining a target virtual element in the virtual environment, the target item 201 may be used to perform a summon operation for the virtual element in the virtual environment or to provide an entry for receiving a request to perform a target action.

The interface 200A also presents elements related to the number of times the target item 201 performs the target action. For example, the number of elements 203 corresponds to the number of times the target item 201 can perform the target action in the virtual environment, while the number of elements 205 corresponds to the number of times the target item 201 can perform the target action in the virtual environment that is currently unavailable but available after a preset duration. In addition, an interface area 211 is also included in interface 200A. In some embodiments, this interface area 211 may also indicate the number of times the target item 201 can perform the target action in the virtual environment and/or the number of times the target action may be increased after the preset duration. In some other embodiments, this interface area 211 may present an indication of the preset duration.

The preset duration is related to the attribute of the target item 201. For example, the preset duration is determined based on the value of the attribute of the target item 201. For example, the higher the value of the attribute of the target item 201 (e.g., the level of the item), the shorter the preset duration related to the number of times the target action is executed.

In the interface 200A, elements associated with attributes of target item 201 are also included. For example, an element 207 indicates the level currently reached by target item 201, while an element 209 indicates the level to be unlocked by target item 201.

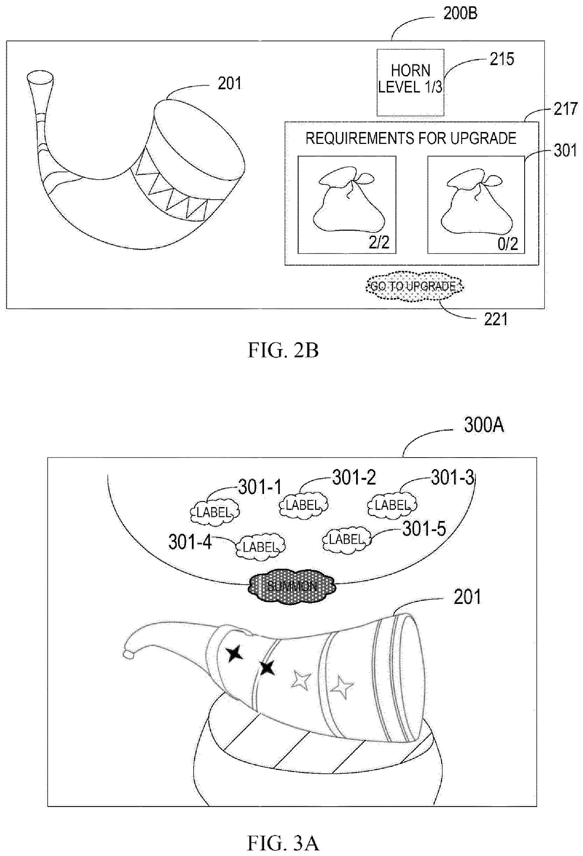

Further, if an interaction is received for element 209, the electronic device 110 may present an interface 200B as shown in FIG. 2B. The interface 200B may provide an entry point for upgrading the level of the target item 201.

As shown in FIG. 2B, the interface 200B includes an interface area 215. The interface area 215 indicates the current level of the target item 201 and the target level to which the target item 201 can be upgraded.

Interface 200B also includes an interface area 217. This interface area 217 presents the type and quantity of elements 209 required to upgrade target items 201 in the virtual environment. If the type and quantity of elements required for upgrading have been obtained, the user can be guided to perform interactive operations related to upgrading target items 201. In interface 200B, since the number of elements required for upgrading has not been reached, the element 221 that guides the user to perform interactive operations related to upgrading target items 201 is not prominently displayed. It should be understood that if the type and quantity of elements required for upgrading target items 201 have been collected in the virtual environment, prompts that target items 201 can be upgraded can be presented in interface 200A.

If an entry point in the interface 200A for receiving a request to perform a target action, such as an interactive operation of the element 203, is detected, the electronic device 110 may present an interface associated with the execution of the target action. The execution process of the target action is described in further detail below in conjunction with FIGS. 3A to 3C.

As shown in FIG. 3A, if the target action is related to the acquisition of virtual characters or virtual items, the interface 300A can provide a set of candidate tags 301-1 to 301-5, which are related to candidate virtual elements that can be obtained in the virtual environment. For example, if the candidate virtual element is a virtual character, the candidate tag can be an attribute of the virtual character (such as the race, profession, specialty, etc. of the virtual character in the virtual environment). The execution of the target action can be triggered after a predetermined number of candidate tags are selected.

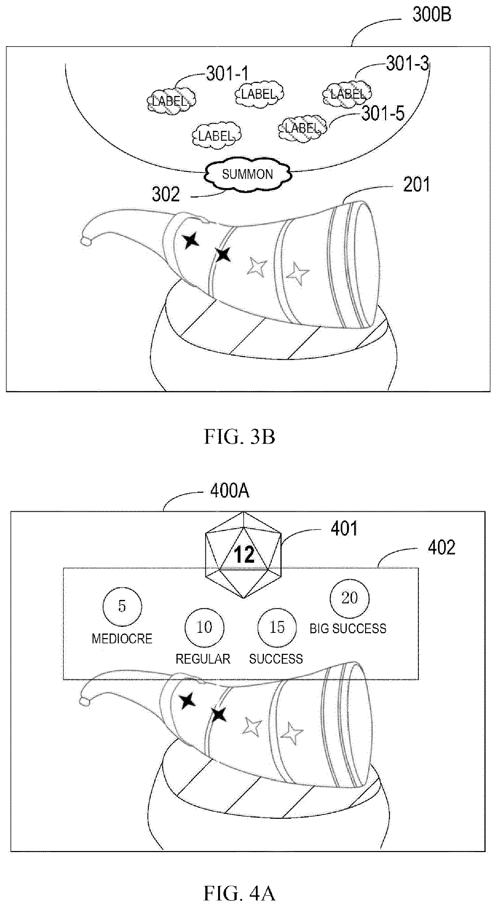

For example, as shown in FIG. 3B, in the interface 300B, if a predetermined number of candidate tags are detected to be selected, an entrance 302 for triggering the execution of the target action can be provided. The electronic device 110 can receive instructions to execute the target action through this entrance. In addition, optionally or alternatively, after receiving the instruction to trigger the execution of the target action, the process (not shown) of the selected candidate tag being absorbed by the target item 201 can also be displayed on the interface.

If an instruction triggering a target action is received in interface 300B, the electronic device 110 presents an execution value corresponding to the execution of the target action using the dynamic changes of the probability interaction element. The execution value is related to the execution result of the target action. For example, if the target action is to obtain a virtual character or virtual item in the virtual environment, the execution value is related to whether the virtual character or virtual item can be obtained. For example, the closer the execution value is to a specific target value, the greater the probability of obtaining the virtual character than the probability of obtaining the virtual item. If the execution value deviates more from the specific target value, the probability of obtaining the virtual item is greater than the probability of obtaining the virtual character.

Optionally, the execution value may be influenced by various factors. For example, the execution value may be related to the attributes of virtual objects (such as virtual players of games). For example, virtual objects with higher levels and/or specific capabilities in the virtual environment have a higher probability of obtaining larger execution values. If there are multiple available virtual objects, the electronic device 110 can provide an entrance for selecting virtual objects that can perform target actions through target items on the interface that guides the execution of target actions.

In some other embodiments, the execution value may be related to the attributes of the target item that performs the target action. For example, target items with higher levels have a higher probability of obtaining a larger execution value when performing the target action.

Optionally, the electronic device 110 can also present the lowest execution value corresponding to the attributes of the target item and/or the virtual object, respectively, to drive the user (such as a real-world gamer) to upgrade the virtual object and/or the target item.

As shown in FIG. 4A, in interface 400A, the electronic device 110 may also present a dynamic variation of a probabilistic interaction element (e.g., a die 401) to represent a determination process of an execution value associated with an interaction action.

Further, the electronic device 110 may control the execution of the interactive action based on the comparison of the execution value and the target value. Multiple target values are presented in the interface area 402 of the interface 400A, which are respectively associated with the execution results of the target action. For example, the larger the target value, the better the results obtained from executing the target action. For example, the target value "20" indicates a higher probability of obtaining better results (such as obtaining virtual characters) from executing the target action, while the value "5" indicates a lower probability of obtaining better results from executing the target action.

Optionally, a level of the result of performing the target action corresponding to the target value can be presented in the interface area 402. For example, the first target value (e.g., "5") corresponds to the first level (e.g., "mediocre "), the second target value (e.g., "10") corresponds to the second level (e.g., "regular"), the third target value (e.g., "15") corresponds to the third level (e.g., "success"), and the fourth target value (e.g., "20") corresponds to the fourth level (e.g., "big success").

In some embodiments, as shown in FIG. 4A, the electronic device 110 may present an execution value, such as "12," utilizing an animated variation of a probabilistic interaction element (e.g., dice 401). The execution value is compared to the presented multiple target values in the interface area 402. Based on the execution value (e.g., "12") being greater than the first target value (e.g., "10") and less than the second target value (e.g., "15"), the electronic device 110 may determine that the result of execution for the target action corresponds to a second level (e.g., "normal"). The second level may indicate, for example, that the probability of obtaining a virtual character is less than the probability of obtaining a virtual item.

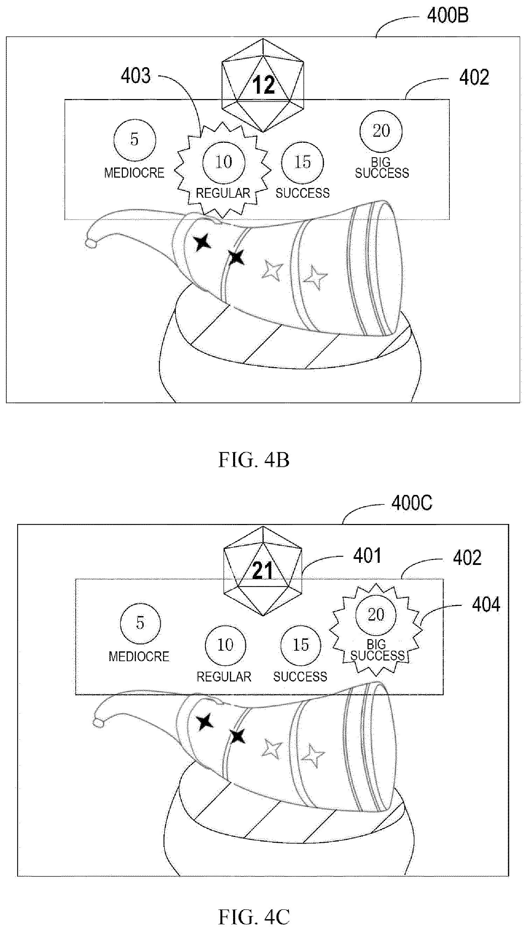

After determining the result of comparing the execution value with the target value and determining the level of the result of executing the target action, as shown in FIG. 4B, the interface area 402 in the interface 400B presents a first target value (e.g., "10") corresponding to the execution value (e.g., "12") and highlight 403 of a second level (e.g., "normal") of the result of executing the target action corresponding to the first target value.

In some embodiments, as shown in FIG. 4C, the electronic device 110 may utilize animated variations of probabilistic interaction elements (e.g., dice 401) to present an execution value, e.g., "21." The execution value is compared to presented multiple target values in the interface area 402. Based on the execution value (e.g., "21") being greater than the fourth target value (e.g., "20"), the electronic device 110 may determine that the result of execution for the target action corresponds to a fourth level (e.g., "big success"). This second level may indicate, for example, that the probability of obtaining a virtual character is greater than the probability of obtaining a virtual item.

After determining the result of comparing the execution value with the target value and determining the level of the result of performing the target action, as shown in FIG. 4C, the interface area 402 in the interface 400C presents a fourth target value (e.g., "20") corresponding to the execution value (e.g., "21") and highlight 404 of a fourth level (e.g., "big success") corresponding to the result of performing the target action corresponding to the first target value.

As described above, the execution value can be determined based on the object attributes of the virtual object related to the execution of the target action in the virtual environment. The object attributes of the virtual object include, for example, the level of the virtual object controlled by the user. The higher the level of the virtual object, the larger the correction value for the execution value. In some embodiments, the object attribute represents the skill level of the virtual object in performing the target action. For example, the higher the skill level of the virtual object, the larger the correction value. In the example of Figures 4A-4C, the user throws a die 401, and the electronic device 110 obtains the throwing value of the die 401 based on probability, and then corrects the throwing value according to the level and skill level of the virtual object controlled by the user, and then presents the execution value on the die 401.

Additionally or alternatively, the target value can also be determined based on the object attribute of the virtual object related to the execution of the target action in the virtual environment. The object attribute of the virtual object include, for example, the level of the virtual object controlled by the user. The higher the level of the virtual object, the larger the correction value for the target value, and correspondingly, the lower the target value, making the probability of the action being successfully executed greater. In some embodiments, the object attribute represent the skill level of the virtual object in executing the target action. For example, the higher the skill level of the virtual object, the larger the correction value, and correspondingly, the lower the target value, making the probability of the action being successfully executed greater.

Additionally or alternatively, after presenting the execution value corresponding to the execution of the target action, the electronic device 110 can also indicate that the opportunity to perform the target action has been used by text, voice, or video reminders. For example, the electronic device 110 can play sound effects (such as the horn being blown) emitted by the target item 201 (such as a horn).

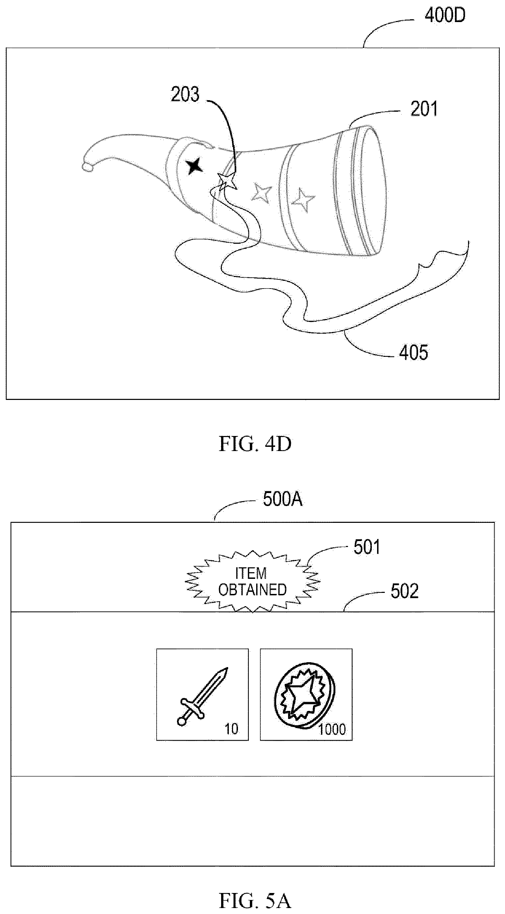

Optionally, as shown in FIG. 4D, the electronic device 110 can present a prompt 405 that the opportunity to perform the target action has been used (for example, the energy overflow of element 203 on the target item 201) through the interface 400D.

It is also possible that when the execution value obtained by executing the target action satisfies the threshold value (such as the maximum value among multiple target values) or the execution result corresponding to the execution value satisfies the threshold level (such as "great success"), the number of times used for this target action can not be consumed. That is to say, under the above conditions, the number of times the target action is allowed to be executed does not change due to this execution.

After presenting an indication that the opportunity to perform the target action has been used, the electronic device 110 may present an interface corresponding to the result of the target action execution. Optionally, before presenting the interface corresponding to the result of the target action execution, the electronic device 110 may also provide guidance for presenting the interface corresponding to the result of the target action execution (e.g., through interactive operations with virtual objects in the virtual environment), thereby making the interaction process in the virtual environment more interesting.

For example, the interface corresponding to the result of the target action execution can display the virtual character or virtual item obtained by executing the target action, which corresponds to the previously presented execution value corresponding to the obtained execution of the target action and the level of the result of the execution target action corresponding to the comparison result between the execution value and the target value.

For example, the electronic device 110 presents the interface 500A corresponding to a second level (e.g., "regular") of the result of performing the target action presented in the interface 400B. The interface 500A may include an indication 501 of the result of performing the target action this time (e.g., "item obtained"). The interface 500A may also present the attribute and number of items obtained in the interface area 502.

As another example, the electronic device 110 presents the interface 500B corresponding to the fourth level (e.g., "big success") of the result of performing the target action presented in the interface 400C. The interface 500B may include an indication 503 of the result of performing the target action this time (e.g., "character obtained"). The interface 500B may also present the image of the obtained virtual character in the interface area 504. In addition, the interface 500B may provide guidance 505 for sharing the obtained virtual character to social applications.

Based on the interaction process described above, on the one hand, the embodiments of the present disclosure can simulate a more fine-grained interaction process for virtual elements, and improve the fun of interaction; on the other hand, the embodiments of the present disclosure can also visually represent the probability mechanism of interactive actions through dynamic probability interaction elements, so as to improve the friendliness of interaction.

It should be understood that the specific number of elements and specific values in the specific interface described in the above examples are only illustrative and are not intended to limit the present disclosure.

### EXAMPLE PROCESS

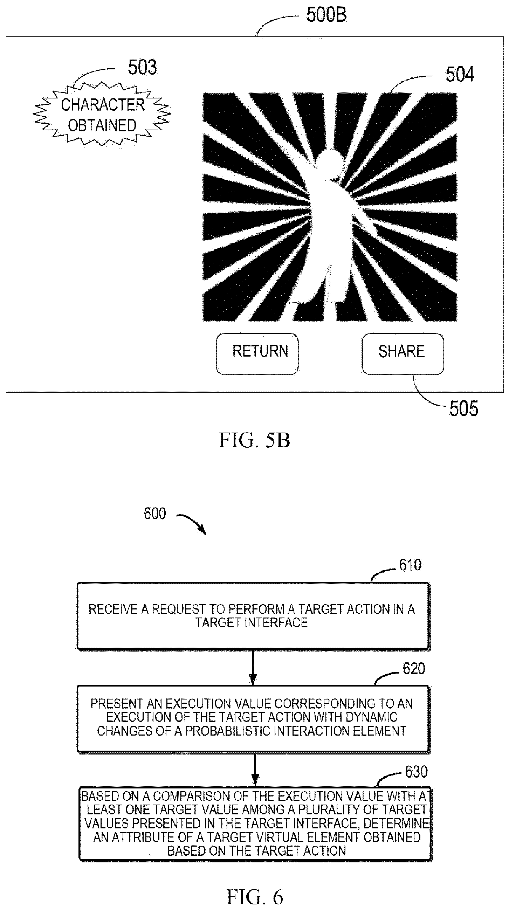

Fig. 6 illustrates a flow chart of a process 600 of interaction in a virtual environment in accordance with some embodiments of the present disclosure. process 600 may be implemented by the electronic device 110 of fig. 1 independently, or by a combination of the electronic device 110 with other computing devices. process 600 will be described in conjunction with fig. 1 for ease of discussion.

As shown in FIG. 6, at block 610, the electronic device 110 receives a request to perform a target action in a target interface, the target action being related to obtaining a virtual element in a virtual environment, the virtual element comprising a virtual item and/or a virtual character.

At block 620, the electronic device 110 presents an execution value corresponding to an execution of the target action with dynamic changes of a probabilistic interaction element.

At block 630, based on a comparison of the execution value with at least one target value among a plurality of target values presented in the target interface, the electronic device 110 determines an attribute of a target virtual element obtained based on the target action.

In some embodiments, receiving the request comprises: providing a set of candidate tags related to a candidate virtual element that can be obtained in the virtual environment; and obtaining the request to perform the target action based on a selection of at least one target tag in the set of candidate tags.

In some embodiments, the attribute of the target virtual element is further determined based on the at least one selected target tag.

In some embodiments, determining an attribute of a target virtual element obtained based on the target action comprises: based on the at least one target tag, increasing a probability of obtaining a virtual element matching the at least one target tag; and based on the increased probability, determining the attribute of the target virtual element obtained based on the target action.

In some embodiments, the process 600 further comprises: presenting a target item for performing the target action in the target interface, wherein the determination of the execution value is based at least on an item attribute of the target item.

In some embodiments, the process 600 further comprises: in response to a number of times that the target action is allowed to be performed being greater than a threshold number of times, an entry for receiving the request is provided in the target interface, wherein the frequency of increasing the number of times is associated with a preset duration, and the preset duration is determined based on a value of the item attribute of the target item.

In some embodiments, the process 600 further comprises: in response to the execution value being greater than or equal to the maximum target value in the at least one target value, causing the number of times that the target action is allowed to be executed not to be changed due to the execution of the target action; and in response to the execution value being less than the maximum target value in the at least one target value, causing the number of times that the target action is allowed to be executed to be reduced due to the target action being executed.

In some embodiments, determining an attribute of a target virtual element obtained based on the target action comprises: determining the target interval corresponding to the execution value in the interval indicated by the multiple target values; and determining, based on the target interval, the attribute of the target virtual element obtained based on the target action.

In some embodiments, the target value and/or the execution value are further determined based on an object attribute of a virtual object associated with execution of the virtual action in the virtual environment.

In some embodiments, the attribute of the target element comprises at least one of the following: a type of the target element indicating that the target element is a virtual item or a virtual character; an item attribute of the obtained virtual item; a character attribute of the obtained virtual character.

### EXAMPLE APPARATUS AND EQUIPMENT

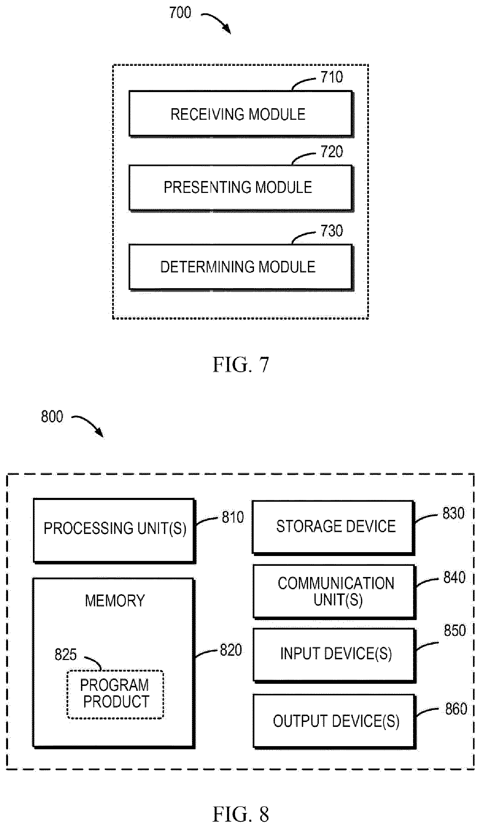

The embodiments of the present disclosure further provide corresponding devices for implementing the above methods or processes. FIG. 7 illustrates a schematic structural block diagram of an apparatus 700 for interaction a virtual environment according to some embodiments of the present disclosure.

As shown in FIG. 7, apparatus 700 comprises a receiving module 710 configured to receive a request to perform a target action in a target interface, the target action being related to obtaining a virtual element in a virtual environment, the virtual element comprising a virtual item and/or a virtual character; a presenting module 720 configured to present an execution value corresponding to an execution of the target action with dynamic changes of a probabilistic interaction elements; and a determining module 730 configured to based on a comparison of the execution value with at least one target value among a plurality of target values presented in the target interface, determine an attribute of a target virtual element obtained based on the target action.

In some embodiments, the receiving module 710 is further configured to: providing a set of candidate tags related to a candidate virtual element that can be obtained in the virtual environment; and obtaining the request to perform the target action based on a selection of at least one target tag in the set of candidate tags.

In some embodiments, the attribute of the target virtual element is further determined based on the at least one selected target tag.

In some embodiments, the determining module 730 is further configured to: based on the at least one target tag, increasing a probability of obtaining a virtual element matching the at least one target tag; and based on the increased probability, determining the attribute of the target virtual element obtained based on the target action.

In some embodiments, the apparatus 700 is further configured to: presenting a target item for performing the target action in the target interface, wherein the determination of the execution value is based at least on an item attribute of the target item.

In some embodiments, the apparatus 700 is further configured to: in response to a number of times that the target action is allowed to be performed being greater than a threshold number of times, an entry for receiving the request is provided in the target interface, wherein the frequency of increasing the number of times is associated with a preset duration, and the preset duration is determined based on a value of the item attribute of the target item.

In some embodiments, the apparatus 700 is further configured to: in response to the execution value being greater than or equal to the maximum target value in the at least one target value, causing the number of times that the target action is allowed to be executed not to be changed due to the execution of the target action; and in response to the execution value being less than the maximum target value in the at least one target value, causing the number of times that the target action is allowed to be executed to be reduced due to the target action being executed.

In some embodiments, the determining module 730 is further configured to: determining the target interval corresponding to the execution value in the interval indicated by the multiple target values; and determining, based on the target interval, the attribute of the target virtual element obtained based on the target action.

In some embodiments, the target value and/or the execution value are further determined based on an object attribute of a virtual object associated with execution of the virtual action in the virtual environment.

In some embodiments, the attribute of the target element comprises at least one of the following: a type of the target element indicating that the target element is a virtual item or a virtual character; an item attribute of the obtained virtual item; a character attribute of the obtained virtual character.

The units included in apparatus 700 may be implemented in various ways, including software, hardware, firmware, or any combination thereof. In some embodiments, one or more units may be implemented using software and/or firmware, for example, machine executable instructions stored on storage medium. In addition to machine executable instructions or as an alternative, some or all units in apparatus 700 may be implemented at least in part by one or more hardware logic components. As an example rather than a limitation, the demonstration types of hardware logic components that may be used include field programmable gate array (FPGA), application specific integrated circuit (ASIC), application specific standard (ASSP), system on chip (SOC), complex programmable logic device (CPLD), and so on.

FIG. 8 illustrates a block diagram of a computing device/server 800 in which one or more embodiments of the present disclosure may be implemented. It is to be understood that the computing device/server 800 shown in FIG. 8 is only exemplary and should not suggest any limitation to the functionality and scope of the embodiments described herein.

As shown in FIG. 8, the computing device/server 800 is in the form of a universal computing device. The components of computing device/server 800 may include, but are not limited to, one or more processors or processing units 810, a memory 820, a storage device 830, one or more communication units 840, one or more input devices 850 and one or more output devices 860. The processing unit 810 may be a real or virtual processor and may perform various processes according to programs stored in the memory 820. In a multiprocessor system, a plurality of processing units performs computer executable instructions in parallel to improve the parallel processing capability of computing device/server 800.

The computing device/server 800 typically includes a plurality of computer storage media. Such media may be any available media accessible by the computing device/server 800, including but not limited to volatile and non-volatile media, detachable and non- detachable media. Memory 820 may be volatile memory (such as a register, a cache, a random access memory (RAM)), a non-volatile memory (such as read-only memory (ROM), electrically erasable programmable read-only memory (EEPROM), flash memory), or some combination thereof. The storage device 830 may be a detachable or non-detachable medium, and may include machine-readable medium, such as a flash drive, a disk, or any other medium that may be used to store information and/or data (e. g., training data for training) and may be accessed within the computing device/server 800.

The computing device/server 800 may further include additional detachable/non-detachable, volatile/non-volatile storage media. Although not shown in FIG. 8, there may be provided a disk drive for reading from or writing into a detachable, non-volatile disk (e.g., a "floppy disk") and an optical disk drive for reading from or writing into a detachable, non-volatile disk. In these cases, each driver may be connected to a bus (not shown) via one or more data medium interfaces. Memory 820 may include computer program product 825, which has one or more program modules configured to perform various methods or actions of various embodiments of the present disclosure.

The communication unit 840 implements communication with another computing devices through a communication medium. Additionally, the functions of the components of the computing device/server 800 may be implemented by a single computing cluster or a plurality of computing machines, which may communicate through communication connections. Therefore, computing device/server 800 may operate in a networked environment using logical connections to one or more other servers, network personal computers (PCs), or another network node.

Input device 850 may be one or more input devices, for example, a mouse, keyboard, a trackball, etc. The output device 860 may be one or more output devices, for example, a display, a speaker, a printer, etc. The computing device/server 800 may also communicate with one or more external devices (not shown) through the communication unit 840 as needed, such as storage devices, display devices, etc., to communicate with one or more devices that enable users to interact with the computing device/server 800, or communicate with any device (e.g., a network card, modem, etc.) that enables the computing device/server 800 to communicate with one or more other computing devices. Such communication may be performed via an input/output (I/O) interface (not shown).

According to exemplary implementations of the present disclosure, a computer-readable storage medium is provided, on which one or more computer instructions are stored, wherein one or more computer instructions are performed by a processor to implement the method described above.

Various aspects of the present disclosure are described herein with reference to the flowchart and/or block diagram of the method, apparatus (system) and computer program product implemented in accordance with the present disclosure. It is to be understood that each block in the flowchart and/or block diagram, as well as the combination of each block in the flowchart and/or block diagram, may be implemented by computer-readable program instructions.

These computer-readable program instructions may be provided to a processing unit of a general-purpose computer, a specialized computer, or other programmable data processing apparatus to produce a machine, such that the instructions, which perform via the processing unit of the computer or other programmable data processing apparatus, generates means that implement the functions/actions specified in one or more blocks in the flowchart and/or block diagram. These computer-readable program instructions may also be stored in a computer-readable storage medium, which enables a computer, a programmable data processing apparatus, and/or other devices to function in a particular manner, thereby the computer-readable medium having the instructions comprises an article of manufacture including instructions which implement various aspects of the functions/actions specified in one or more blocks of the flowchart and/or block diagram.

These computer-readable program instructions may also be loaded onto a computer, other programmable data processing apparatus, or other devices to perform a series of operational steps on a computer, other programmable data processing apparatus, or other device, in order to generate a computer implementation process, thereby enabling the execution of a series of operational steps on the computer, other programmable data processing apparatus, or other device, the instructions performed on other devices implement the functions/actions specified in one or more blocks of the flowchart and/or block diagram.

The flowchart and block diagram in the figure illustrate a possible architecture, functionality, and operation of possible implementations of systems, methods, and computer program products in accordance with various implementations of the present disclosure. At this point, each block in a flowchart or block diagram may represent a module, program segment, or a portion of instruction, which comprises one or more executable instructions for implementing a specified logical function. In some alternative implementations, the functions indicated in the block may also occur in a different order than those indicated in the figure. For example, two blocks shown in succession may, in fact, be performed substantially concurrently, and sometimes they may also be performed in the reverse order, depending on the functionality involved. It should also be noted that each block of the block diagram and/or flowchart, as well as the combination of blocks in the block diagram and/or flowchart, may be implemented by dedicated hardware-based systems that perform specified functionality or actions, or may be implemented by a combination of dedicated hardware and computer instructions.

The above has already described the various implementations of the present disclosure, and the above illustration is exemplary, not exhaustive, and is not limited to the disclosed implementations. The selection of terms used herein aims to best explain the principles of implementation, practical applications, or improvements over technology in the market, or to enable other ordinary technical personnel in the field of this technology to understand the various implementations disclosed herein.

## Claims

1. An interaction method (600) in a virtual environment, comprising:
receiving (610) a request to perform a target action in a target interface, the target action being obtaining a virtual element in a virtual environment, the virtual element comprising a virtual item and/or a virtual character;
presenting (620) an execution value corresponding to an execution of the target action with dynamic changes of a probabilistic interaction element; and
based on a comparison of the execution value with at least one target value among a plurality of target values presented in the target interface, determining (630) an attribute of a target virtual element obtained based on the target action,
**characterised by**:
the attribute comprising a type of target virtual element,
wherein determining an attribute of a target virtual element obtained based on the target action comprises:
determining the target interval corresponding to the execution value in the interval indicated by the plurality of target values, different target intervals corresponding to different attributes of the target virtual element; and
determining, based on the target interval, the attribute of the target virtual element obtained based on the target action.

2. The method (600) of claim 1, wherein receiving the request comprises:
providing a set of candidate tags related to a candidate virtual element that can be obtained in the virtual environment; and
obtaining the request to perform the target action based on a selection of at least one target tag in the set of candidate tags.

3. The method (600) of claim 2, wherein the attribute of the target virtual element is further determined based on the at least one selected target tag.

4. The method (600) of claim 2, wherein determining an attribute of a target virtual element obtained based on the target action comprises:
based on the at least one target tag, increasing a probability of obtaining a virtual element matching the at least one target tag; and
based on the increased probability, determining the attribute of the target virtual element obtained based on the target action.

5. The method (600) of claim 1, further comprising:
presenting a target item for performing the target action in the target interface, wherein the determination of the execution value is based at least on an item attribute of the target item.

6. The method (600) of claim 5, further comprising:
in response to a number of times that the target action is allowed to be performed being greater than a threshold number of times, an entry for receiving the request is provided in the target interface, wherein the frequency of increasing the number of times is associated with a preset duration, and the preset duration is determined based on a value of the item attribute of the target item.

7. The method (600) of claim 6, further comprising:
in response to the execution value being greater than or equal to the maximum target value in the at least one target value, causing the number of times that the target action is allowed to be executed not to be changed due to the execution of the target action; and
in response to the execution value being less than the maximum target value in the at least one target value, causing the number of times that the target action is allowed to be executed to be reduced due to the target action being executed.

8. The method (600) of claim 1, wherein the target value and/or the execution value are further determined based on an object attribute of a virtual object associated with execution of the virtual action in the virtual environment.

9. The method (600) of claim 1, wherein the attribute of the target element comprises at least one of the following:
a type of the target element indicating that the target element is a virtual item or a virtual character;
an item attribute of the obtained virtual item;
a character attribute of the obtained virtual character.

10. An electronic device (800) comprising:
at least one processing unit (810); and
at least one memory (820), the at least one memory being coupled to the at least one processing unit (810) and storing instructions for execution by the at least one processing unit (810), the instructions causing the device (800) to perform the method (600) according to any one of claims 1 to 9 when executed by the at least one processing unit (810).

11. A computer readable storage medium having stored thereon a computer program which, when executed by a processor, implements the method (600) according to any one of claims 1 to 9.

## Patentansprüche

1. Interaktionsverfahren (600) in einer virtuellen Umgebung, umfassend:
Empfangen (610) einer Anforderung zum Durchführen einer Zielaktion in einer Zielschnittstelle, wobei die Zielaktion Abrufen eines virtuellen Elements in einer virtuellen Umgebung ist, wobei das virtuelle Element einen virtuellen Gegenstand und/oder eine virtuelle Figur umfasst;
Darstellen (620) eines Ausführungswerts, welcher einer Ausführung der Zielaktion mit dynamischen Änderungen eines probabilistischen Interaktionselements entspricht; und
basierend auf einem Vergleich des Ausführungswerts mit zumindest einem Zielwert aus einer Vielzahl von Zielwerten, welche in der Zielschnittstelle dargestellt sind, Bestimmen (630) eines Attributs eines virtuellen Zielelements, welches basierend auf der Zielaktion abgerufen wurde, **dadurch gekennzeichnet,**
**dass** das Attribut einen Typ eines
virtuellen Zielelements umfasst,
wobei Bestimmen eines Attributs eines virtuellen Zielelements, welches basierend auf der Zielaktion abgerufen wird, umfasst:
Bestimmen des Zielintervalls, welches dem Ausführungswert in dem durch die Vielzahl der Zielwerte angegebenen Intervall entspricht, wobei unterschiedliche Zielintervalle unterschiedlichen Attributen des virtuellen Zielelements entsprechen; und
Bestimmen des Attributs des virtuellen Zielelements, welches basierend auf der Zielaktion abgerufen wird, basierend auf dem Zielintervall.

2. Verfahren (600) nach Anspruch 1, wobei Empfangen der Anforderung umfasst:
Bereitstellen einer Menge von Kandidaten-Tags, welche sich auf ein virtuelles Kandidatenelement beziehen, welches in der virtuellen Umgebung abgerufen werden kann; und
Abrufen der Anforderung zum Durchführen der Zielaktion basierend auf einer Auswahl von zumindest einem Ziel-Tag aus der Menge der Kandidaten-Tags.

3. Verfahren (600) nach Anspruch 2, wobei das Attribut des virtuellen Zielelements weiter basierend auf dem zumindest einen ausgewählten Ziel-Tag bestimmt wird.

4. Verfahren (600) nach Anspruch 2, wobei Bestimmen eines Attributs eines virtuellen Zielelements, welches basierend auf der Zielaktion abgerufen wird, umfasst:
basierend auf dem zumindest einen Ziel-Tag, Erhöhen einer Wahrscheinlichkeit, ein virtuelles Element abzurufen, welches mit dem zumindest einen Ziel-Tag übereinstimmt; und
basierend auf der erhöhten Wahrscheinlichkeit, Bestimmen des Attributs des virtuellen Zielelements, welches basierend auf der Zielaktion abgerufen wird.

5. Verfahren (600) nach Anspruch 1, weiter umfassend:
Darstellen eines Zielgegenstands zum Durchführen der Zielaktion in der Zielschnittstelle, wobei die Bestimmung des Ausführungswerts zumindest auf einem Gegenstandattribut des Zielgegenstands basiert.

6. Verfahren (600) nach Anspruch 5, weiter umfassend:
als Reaktion darauf, dass eine Anzahl von Malen, welche die Zielaktion durchgeführt werden darf, größer als eine Schwellenanzahl von Malen ist, wird ein Eintrag zum Empfangen der Anforderung in der Zielschnittstelle bereitgestellt, wobei die Häufigkeit des Erhöhens der Anzahl von Malen mit einer voreingestellten Dauer verknüpft ist, und die voreingestellte Dauer basierend auf einem Wert des Gegenstandattributs des Zielgegenstands bestimmt wird.

7. Verfahren (600) nach Anspruch 6, weiter umfassend:
als Reaktion darauf, dass der Ausführungswert größer oder gleich dem maximalen Zielwert in dem zumindest einen Zielwert ist, Veranlassen, dass die Anzahl von Malen, welche die Zielaktion ausgeführt werden darf, aufgrund der Ausführung der Zielaktion nicht geändert wird; und
als Reaktion darauf, dass der Ausführungswert kleiner als der maximale Zielwert in dem zumindest einen Zielwert ist, Veranlassen, dass die Anzahl von Malen, welche die Zielaktion ausgeführt werden darf, aufgrund dessen, dass die Zielaktion ausgeführt wird, verringert wird.

8. Verfahren (600) nach Anspruch 1, wobei der Zielwert und/oder der Ausführungswert weiter basierend auf einem Objektattribut eines virtuellen Objekts bestimmt werden, welches mit Ausführung der virtuellen Aktion in der virtuellen Umgebung verknüpft ist.

9. Verfahren (600) nach Anspruch 1, wobei das Attribut des Zielelements zumindest eines der folgenden umfasst:
einen Typ des Zielelements, welcher anzeigt, dass das Zielelement ein virtueller Gegenstand oder eine virtuelle Figur ist;
ein Gegenstandattribut des abgerufenen virtuellen Gegenstands;
ein Figurattribut der abgerufenen virtuellen Figur.

10. Elektronische Vorrichtung (800) umfassend:
zumindest eine Verarbeitungseinheit (810); und
zumindest einen Speicher (820), wobei der zumindest eine Speicher mit der zumindest einen Verarbeitungseinheit (810) gekoppelt ist und Anweisungen zur Ausführung durch die zumindest eine Verarbeitungseinheit (810) speichert, wobei die Anweisungen die Vorrichtung (800) veranlassen, das Verfahren (600) nach einem der Ansprüche 1 bis 9 durchzuführen, wenn sie von der zumindest einen Verarbeitungseinheit (810) ausgeführt werden.

11. Computerlesbares Speichermedium mit darauf gespeichertem Computerprogramm, welches, wenn durch einen Prozessor ausgeführt, das Verfahren (600) nach einem der Ansprüche 1 bis 9 implementiert.

## Revendications

1. Procédé d'interaction (600) dans un environnement virtuel, comprenant :
la réception (610) d'une requête visant à effectuer une action cible dans une interface cible, l'action cible consistant à obtenir un élément virtuel dans un environnement virtuel, l'élément virtuel comprenant un objet virtuel et/ou un personnage virtuel ;
la présentation (620) d'une valeur d'exécution correspondant à une exécution de l'action cible avec des changements dynamiques d'un élément d'interaction probabiliste ; et
sur la base d'une comparaison de la valeur d'exécution avec au moins une valeur cible parmi une pluralité de valeurs cibles présentées dans l'interface cible, la détermination (630) d'un attribut d'un élément virtuel cible obtenu sur la base de l'action cible, **caractérisé par** :
l'attribut comprenant un type de
élément virtuel cible,
dans lequel la détermination d'un attribut d'un élément virtuel cible obtenu à partir de l'action cible comprend :
la détermination de l'intervalle cible correspondant à la valeur d'exécution dans l'intervalle indiqué par la pluralité des valeurs cibles, différents intervalles cibles correspondant à différents attributs de l'élément virtuel cible ; et
la détermination, en fonction de l'intervalle cible, de l'attribut de l'élément virtuel cible obtenu en fonction de l'action cible.

2. Procédé (600) de la revendication 1, dans lequel la réception de la requête comprend :
la fourniture d'un ensemble d'étiquettes candidates liées à un élément virtuel candidat qui peut être obtenu dans l'environnement virtuel ; et
l'obtention de la requête d'exécution de l'action cible sur la base de la sélection d'au moins une balise cible dans l'ensemble des balises candidates.

3. Procédé (600) de la revendication 2, dans lequel l'attribut de l'élément virtuel cible est en outre déterminé sur la base d'au moins une balise cible sélectionnée.

4. Procédé (600) de la revendication 2, dans lequel la détermination d'un attribut d'un élément virtuel cible obtenu à partir de l'action cible comprend :
en se basant sur au moins une étiquette cible, l'augmentation de la probabilité d'obtenir un élément virtuel correspondant à au moins une étiquette cible ; et
en se basant sur la probabilité accrue, la détermination de l'attribut de l'élément virtuel cible obtenu en fonction de l'action cible.

5. Procédé (600) de la revendication 1, comprenant en outre :
la présentation d'un élément cible pour l'exécution de l'action cible dans l'interface cible, la détermination de la valeur d'exécution étant basée au moins sur un attribut de l'élément cible.

6. Procédé (600) de la revendication 5, comprenant en outre, avant la récupération :
lorsque le nombre de fois où l'action cible est autorisée à être effectuée dépasse un certain seuil, une entrée pour recevoir la requête est fournie dans l'interface cible, dans laquelle la fréquence d'augmentation du nombre de fois est associée à une durée prédéfinie, et cette durée prédéfinie est déterminée en fonction d'une valeur de l'attribut de l'élément cible.

7. Procédé (600) de la revendication 6, comprenant en outre :
en réponse au fait que la valeur d'exécution est supérieure ou égale à la valeur cible maximale parmi lesdites au moins une valeur cible, ce qui entraîne que le nombre de fois où l'action cible est autorisée à être exécutée ne change pas à la suite de l'exécution de ladite action cible ; et
en réponse au fait que la valeur d'exécution est inférieure à la valeur cible maximale dans au moins une valeur cible, ce qui entraîne une réduction du nombre de fois où l'action cible est autorisée à être exécutée en raison de l'exécution de cette action.

8. Procédé (600) de la revendication 1, dans lequel la valeur cible et/ou la valeur d'exécution est déterminée en outre en fonction d'un attribut d'objet d'un objet virtuel associé à l'exécution de l'action virtuelle dans l'environnement virtuel.

9. Procédé (600) de la revendication 1, dans lequel l'attribut de l'élément cible comprend au moins un des éléments suivants :
un type de l'élément cible indiquant que l'élément cible est un élément virtuel ou un caractère virtuel ;
un attribut de l'objet virtuel obtenu ;
un attribut de caractère du caractère virtuel obtenu.

10. Dispositif électronique (800) comprenant :
au moins une unité de traitement (810) ; et
au moins une mémoire (820), la au moins une mémoire étant couplée à la au moins une unité de traitement (810) et stockant des instructions à exécuter par l'au moins une unité de traitement (810), les instructions faisant en sorte que le dispositif (800) exécute le procédé (600) selon l'une quelconque des revendications 1 à 9 lorsqu'elles sont exécutées par l'unité de traitement (810).

11. Support de stockage lisible par ordinateur sur lequel est stocké un programme informatique qui, lorsqu'il est exécuté par un processeur, met en œuvre le procédé (600) selon l'une quelconque des revendications 1 à 9.
